# EUROPEAN PATENT APPLICATION

(11) **EP 4 692 682 A1**
(43) Date of publication of application: **11.02.2026**
(21) Application number: 24795518.0
(22) Date of filing: 04.02.2024
(51) Int. Cl.: F25B 39/02, F25B 39/04, F25B 31/00, F25B 41/34, B60L 58/26

(54) **ALL-IN-ONE PLATE HEAT EXCHANGER, TEMPERATURE CONTROL APPARATUS COMPRISING SAME, ENERGY STORAGE DEVICE, AND VEHICLE**

(30) Priority: 25.04.2023 CN 202310473310
(71) Applicant: Huawei Digital Power Technologies Co., Ltd., Shenzhen, Guangdong 518043 (CN)
(72) Inventor: LI, Zhaohui, Shenzhen, Guangdong 518043 (CN); LI, Malin, Shenzhen, Guangdong 518043 (CN); LI, Quanming, Shenzhen, Guangdong 518043 (CN)
(74) Representative: Isarpatent
(86) International application number: PCT/CN2024/075679
(87) International publication number: WO 2024/222129

(57) **Abstract**

An integrated plate heat exchanger, a temperature control apparatus, an energy storage device, and a vehicle are disclosed. The heat exchanger includes an intermediate partition plate (40), a plate condenser (10), and a plate evaporator (20). The plate condenser (10) and the plate evaporator (20) are respectively fastened on two opposite sides of the intermediate partition plate (40), the plate condenser (10) includes a plurality of condenser heat exchange plates (15) that are stacked, and the plate evaporator (20) includes a plurality of evaporator heat exchange plates (25) that are stacked. At least one of a stacking direction of the plurality of condenser heat exchange plates 915) or a stacking direction of the plurality of evaporator heat exchange plates (25) is parallel to or perpendicular to the intermediate partition plate. The heat exchanger has a compact structure and a small overall volume, and may occupy less internal space of the temperature control apparatus.

## Description

This application claims priority to Chinese Patent Application No. 202310473310.4, filed with the China National Intellectual Property Administration on April 25, 2023, and entitled "INTEGRATED PLATE HEAT EXCHANGER, TEMPERATURE CONTROL APPARATUS WITH SAME, ENERGY STORAGE DEVICE, AND VEHICLE", which is incorporated herein by reference in its entirety.

### TECHNICAL FIELD

This application relates to the field of temperature control technologies, and specifically, to an integrated plate heat exchanger, a temperature control apparatus, an energy storage device, and a vehicle.

### BACKGROUND

A heat exchanger is usually used in a temperature control apparatus, and the heat exchanger controls a temperature of a coolant, so that the temperature control apparatus can control a temperature of a heat generation component. With development of industries such as the photovoltaic energy storage device industry and the new energy vehicle industry, heat exchangers are gradually used widely.

A heat exchanger in a conventional technology includes components such as an evaporation unit, a condensation unit, and an electronic expansion valve. These components are independent of each other and are sequentially connected through a liquid runner. As a result, the heat exchanger has a large volume and complex assembly. This is not conducive to internal space arrangement of an energy storage device or a vehicle.

### SUMMARY

This application provides an integrated plate heat exchanger with a compact structure, a temperature control apparatus, an energy storage device, and a vehicle. This application specifically includes the following solutions.

According to a first aspect, this application provides a heat exchanger, where the heat exchanger includes an intermediate partition plate, a plate condenser, and a plate evaporator, the plate condenser and the plate evaporator are respectively fastened on two opposite sides of the intermediate partition plate, the plate condenser includes a plurality of condenser heat exchange plates that are stacked, and the plate evaporator includes a plurality of evaporator heat exchange plates that are stacked, where
at least one of a stacking direction of the plurality of condenser heat exchange plates or a stacking direction of the plurality of evaporator heat exchange plates is parallel to or perpendicular to the intermediate partition plate.

According to the heat exchanger provided in this application, the plate condenser and the plate evaporator are respectively fastened on the two opposite sides of the intermediate partition plate. In this way, while it is ensured that the plate condenser and the plate evaporator respectively implement heat exchange functions, a spacing distance between the plate condenser and the plate evaporator is shortened, so that an overall volume of the heat exchanger is small. The stacking direction of the condenser heat exchange plate may be parallel to or perpendicular to the intermediate partition plate, and the stacking direction of the evaporator heat exchange plate may also be parallel to or perpendicular to the intermediate partition plate. Both the condenser heat exchange plate and the evaporator heat exchange plate and the intermediate partition plate are arranged in a simple manner, and the plate condenser and the plate evaporator may be processed and assembled in an integrated manner. Therefore, manufacturing and assembly processes of the heat exchanger are simplified.

In an implementation, a material of the intermediate partition plate is metal.

In an implementation, a material of the intermediate partition plate is aluminum.

In an implementation, the plate condenser, the plate evaporator, and the intermediate partition plate are integrally formed through welding.

In an implementation, a material of the condenser heat exchange plate is nickel.

In an implementation, a material of the evaporator heat exchange plate is nickel.

In an implementation, the condenser heat exchange plate and the intermediate partition plate are integrally formed through welding.

In an implementation, the evaporator heat exchange plate and the intermediate partition plate are integrally formed through welding.

In an implementation, the condenser heat exchange plate, the evaporator heat exchange plate, and the intermediate partition plate are integrally formed through welding.

In an implementation, the heat exchanger is sandwiched, and in an arrangement direction of the plate condenser and the plate evaporator, an area of the intermediate partition plate is less than or equal to areas of the plurality of condenser heat exchange plates or areas of the plurality of evaporator heat exchange plates; or in a stacking direction of the plate condenser or a stacking direction of the plate evaporator, a height of the intermediate partition plate is less than or equal to a stacking height of the plate condenser or the plate evaporator.

In this implementation, the area of the intermediate partition plate is set to be less than the area of the condenser heat exchange plate or the evaporator heat exchange plate, or the height of the intermediate partition plate is set to be less than the stacking height of the plate condenser or the plate evaporator, so that a contour size of the intermediate partition plate can be controlled, to prevent the intermediate partition plate from extending out of an outer contour of the condenser heat exchange plate or the evaporator heat exchange plate and prevent an overall outline size of the heat exchanger from expanding.

In an implementation, the stacking direction of the plurality of condenser heat exchange plates is the same as the stacking direction of the plurality of evaporator heat exchange plates.

In this implementation, the stacking direction of the plurality of condenser heat exchange plates is the same as the stacking direction of the plurality of evaporator heat exchange plates, and both the plate condenser and the plate evaporator may be fastened to the intermediate partition plate in a similar manner, to facilitate assembly of the heat exchanger.

In an implementation, in the arrangement direction of the plate condenser and the plate evaporator, a distance size between the plate condenser and the plate evaporator is equal to a thickness size of the intermediate partition plate.

In this implementation, the plate condenser and the plate evaporator may be attached to two opposite outer surfaces of the intermediate partition plate, to reduce the overall volume of the heat exchanger.

In an implementation, the plate condenser includes a first coolant inlet, a first coolant outlet, a first refrigerant inlet, and a first refrigerant outlet, and the plate evaporator includes a second coolant inlet, a second coolant outlet, a second refrigerant inlet, and a second refrigerant outlet, where
the first coolant inlet communicates with the first coolant outlet through a coolant passage inside the plate condenser, and the first refrigerant inlet communicates with the first refrigerant outlet through a refrigerant passage inside the plate condenser; and
the second coolant inlet communicates with the second coolant outlet through a coolant passage inside the plate evaporator, and the second refrigerant inlet communicates with the second refrigerant outlet through a refrigerant passage inside the plate evaporator.

In this implementation, a coolant heat exchange working medium may exchange heat in the internal passage of the plate condenser to implement a heat exchange function of the plate condenser, and a coolant and a heat exchange working medium may exchange heat in the internal passage of the plate evaporator to implement a heat exchange function of the plate evaporator.

In an implementation, two adjacent condenser heat exchange plates are attached to each other, and an attachment surface of at least one condenser heat exchange plate is provided with a groove, to form a plurality of internal passages in the plate condenser. A part of the plurality of internal passages each communicate with the first coolant inlet and the first coolant outlet and are constructed as the coolant passage of the plate condenser, and another part of internal passages each communicate with the first refrigerant inlet and the first refrigerant outlet and are constructed as the refrigerant passage of the plate condenser.

In an implementation, two adjacent evaporator heat exchange plates are attached to each other, and an attachment surface of at least one evaporator heat exchange plate is provided with a groove, to form a plurality of internal passages in the plate evaporator. A part of the plurality of internal passages each communicate with the second coolant inlet and the second coolant outlet and are constructed as the coolant passage of the plate evaporator, and another part of internal passages each communicate with the second refrigerant inlet and the second refrigerant outlet and are constructed as the refrigerant passage of the plate evaporator.

In the foregoing two implementations, a structure of the internal passage formed between each condenser heat exchange plate and each evaporator heat exchange plate is simple, and the plate condenser and the plate evaporator are easy to manufacture.

In an implementation, a connection line between the first coolant inlet and the first coolant outlet and a connection line between the first refrigerant inlet and the first refrigerant outlet are perpendicular to or parallel to the intermediate partition plate, and the connection line between the first coolant inlet and the first coolant outlet is parallel to the connection line between the first refrigerant inlet and the first refrigerant outlet; and
a connection line between the second coolant inlet and the second coolant outlet and a connection line between the second refrigerant inlet and the second refrigerant outlet are perpendicular to or parallel to the intermediate partition plate, and the connection line between the second coolant inlet and the second coolant outlet is parallel to the connection line between the second refrigerant inlet and the second refrigerant outlet.

In this implementation, an arrangement manner of inlets and outlets for the coolant and the heat exchange working medium in the plate condenser and an arrangement manner of inlets and outlets of the coolant and the heat exchange working medium in the plate evaporator are set, to facilitate connections between the heat exchanger and external runners, and facilitate arrangement of the internal passages of the plate condenser and the plate evaporator.

In an implementation, the heat exchanger includes a refrigerant substrate, and a plurality of runners are provided in the refrigerant substrate, where
the first coolant inlet, the first coolant outlet, and the first refrigerant inlet of the plate condenser are arranged on a surface that is of the plate condenser and that is perpendicular to the intermediate partition plate;
the second coolant inlet, the second coolant outlet, and the second refrigerant inlet of the plate evaporator are arranged on a surface that is of the plate evaporator and that is perpendicular to the intermediate partition plate; and
the refrigerant substrate is attached to the surface of the plate condenser and the surface of the plate evaporator, and the plurality of runners respectively communicate with the first coolant inlet, the first coolant outlet, the first refrigerant inlet, the second coolant inlet, the second coolant outlet, and the second refrigerant inlet.

In this implementation, the refrigerant substrate is disposed to be attached to a surface of the heat exchanger, and a plurality of ports on the plate condenser and the plate evaporator are provided on the surface of the heat exchanger, so that the heat exchanger can be connected to external runners through one refrigerant substrate. Therefore, assembly of the heat exchanger is simplified, and arrangement of the runners is facilitated.

In an implementation, the plate condenser and the plate evaporator each include a plurality of internal passages, where
the plurality of condenser heat exchange plates are arranged in parallel with the intermediate partition plate, one condenser heat exchange plate is arranged adjacent to the intermediate partition plate and is fastened to a side surface of the intermediate partition plate, and a gap between the condenser heat exchange plate and the intermediate partition plate forms one internal passage of the plate condenser; and
the plurality of evaporator heat exchange plates are arranged in parallel with the intermediate partition plate, one evaporator heat exchange plate is arranged adjacent to the intermediate partition plate and is fastened to another side surface of the intermediate partition plate, and a gap between the condenser heat exchange plate and the intermediate partition plate forms one internal passage of the plate evaporator.

In this implementation, when the intermediate partition plate is attached to one condenser heat exchange plate and one evaporator heat exchange plate, one internal passage may be formed by using the gap between the intermediate partition plate and the condenser heat exchange plate to which the intermediate partition plate is attached and the gap between the intermediate partition plate and the evaporator heat exchange plate to which the intermediate partition plate is attached. This extends the internal passage in the plate condenser and the plate evaporator, achieving better heat exchange effect.

In an implementation, the plurality of condenser heat exchange plates are perpendicular to the intermediate partition plate, one or more condenser heat exchange plates are fastened to a side surface of the intermediate partition plate, and a gap between two adjacent condenser heat exchange plates forms one internal passage of the plate condenser; and
the plurality of evaporator heat exchange plates are perpendicular to the intermediate partition plate, one or more evaporator heat exchange plates are fastened to another side surface of the intermediate partition plate, and a gap between two adjacent evaporator heat exchange plates forms one internal passage of the plate evaporator.

In this implementation, the partition plate is attached to each condenser heat exchange plate and each evaporator heat exchange plate. In this case, internal passages are separately formed between the adjacent condenser heat exchange plates and between the adjacent evaporator heat exchange plates.

In an implementation, the heat exchanger includes an accommodation cavity and an electronic expansion valve, the accommodation cavity is configured to accommodate the electronic expansion valve, and the electronic expansion valve is configured to reduce pressure of a heat exchange working medium flowing out of the plate condenser, where
at least a part of the plurality of condenser heat exchange plates include notches, the notch penetrates the condenser heat exchange plate in the stacking direction of the plurality of condenser heat exchange plates, the part of condenser heat exchange plates including the notches are sequentially arranged adjacent to each other, and the notches of the part of condenser heat exchange plates including the notches communicate with each other to form the accommodation cavity; or
at least a part of evaporator heat exchange plates of the plurality of plate evaporators include notches, the notch penetrates the evaporator heat exchange plate in the stacking direction of the plurality of evaporator heat exchange plates, the part of evaporator heat exchange plates including the notches are sequentially arranged adjacent to each other, and the notches of the part of evaporator heat exchange plates including the notches communicate with each other to form the accommodation cavity.

In this implementation, the electronic expansion valve is configured to reduce the pressure of the heat exchange working medium flowing out of the plate condenser, to improve heat exchange efficiency of the heat exchanger. The accommodation cavity may be further disposed in the plate condenser or the plate evaporator to accommodate the electronic expansion valve, to improve integration of the heat exchanger and control the overall volume of the heat exchanger.

In an implementation, the intermediate partition plate includes a communicating hole channel, the hole channel communicates one side and the other side of the intermediate partition plate in the arrangement direction of the plate condenser and the plate evaporator, and the hole channel is used to:
communicate the internal passage of the plate condenser with an outlet of the electronic expansion valve; or communicate the internal passage of the plate evaporator with an inlet of the electronic expansion valve.

In this implementation, the plate condenser and the plate evaporator of the heat exchanger are separately attached to the intermediate partition plate. Therefore, the internal passage may be further used to cooperate with the hole channel of the intermediate partition plate between the plate condenser and the intermediate partition plate and between the plate evaporator and the intermediate partition plate, to communicate the inlet or the outlet of the electronic expansion valve with the plate condenser or the plate evaporator through the intermediate partition plate, so that a quantity of external runners of the heat exchanger is reduced, and the integration of the heat exchanger is improved.

According to a second aspect, this application provides a temperature control apparatus, including a radiator, a compressor, and the heat exchanger provided in any one of the foregoing implementations, where
the radiator is configured to cool a coolant flowing out of the plate condenser; and
the compressor is configured to boost pressure of a heat exchange working medium transmitted between the plate evaporator and the plate condenser.

According to the temperature control apparatus provided in the second aspect of this application, the heat exchanger provided in the first aspect is used, to take, through heat exchange in the plate evaporator and the plate condenser in sequence, heat generated by a heat generation component during operation away from the heat generation component and then discharge the heat through the radiator. The heat exchanger has a compact structure, is easy to manufacture, and has high reliability. Therefore, a volume of the temperature control apparatus in this application is correspondingly reduced, costs of the temperature control apparatus are reduced, and reliability of the temperature control apparatus is also improved.

According to a third aspect, this application provides an energy storage device, including a battery pack and the temperature control apparatus provided in the second aspect. The temperature control apparatus is configured to control a temperature of the battery pack by using the heat exchanger.

According to a fourth aspect, this application provides a vehicle, including a powertrain and the energy storage device provided in the third aspect. The energy storage device is configured to supply power to the powertrain.

The energy storage device provided in the third aspect of this application may be used as an independent energy storage device, for example, a photovoltaic energy storage device. The energy storage device provided in this application may be further used in the vehicle provided in the fourth aspect, and the energy storage device is configured to supply power to the powertrain of the vehicle. In the foregoing two application scenarios, because the energy storage device uses the temperature control apparatus provided in the second aspect, the energy storage device has a small volume and a compact structure. This facilitates internal space arrangement of the energy storage device and the vehicle, and improves reliability of the energy storage device and the vehicle.

### BRIEF DESCRIPTION OF DRAWINGS

FIG. 1 is a diagram of a principle framework of a temperature control apparatus in an energy storage device according to an embodiment of this application;
FIG. 2 is a diagram of an internal principle framework of a temperature control apparatus according to an embodiment of this application;
FIG. 3 is a diagram of a structure of a heat exchanger in a temperature control apparatus according to an embodiment of this application;
FIG. 4 is an exploded view of a structure of a heat exchanger in a temperature control apparatus according to an embodiment of this application;
FIG. 5 is a diagram of a structure of a heat exchanger during operation of the heat exchanger according to an embodiment of this application from another view angle;
FIG. 6 is a diagram of a structure of a plate condenser in a heat exchanger according to an embodiment of this application;
FIG. 7 is an exploded view of a structure of a plate condenser in a heat exchanger according to an embodiment of this application;
FIG. 8 is a diagram of a planar structure of a condenser heat exchange plate in a heat exchanger according to an embodiment of this application;
FIG. 9 is a diagram of a structure of an internal passage formed on a condenser heat exchange plate in a heat exchanger according to an embodiment of this application;
FIG. 10 is a diagram of a connection manner of an internal passage of a plate condenser in a heat exchanger according to an embodiment of this application;
FIG. 11 is a diagram of a structure of a plate evaporator in a heat exchanger according to an embodiment of this application;
FIG. 12 is an exploded view of a structure of a plate evaporator in a heat exchanger according to an embodiment of this application;
FIG. 13 is a diagram of a planar structure of a plate evaporator in a heat exchanger according to an embodiment of this application;
FIG. 14 is a diagram of a structure of an internal passage formed on an evaporator heat exchange plate in a heat exchanger according to an embodiment of this application;
FIG. 15 is a diagram of a connection manner of an internal passage of a plate evaporator in a heat exchanger according to an embodiment of this application;
FIG. 16 is a diagram of an arrangement manner of a condenser heat exchange plate and an evaporator heat exchange plate in a heat exchanger according to an embodiment of this application;
FIG. 17 is a diagram of a structure of a condenser heat exchange plate in a heat exchanger according to another embodiment of this application;
FIG. 18 is a diagram of a structure of a plate condenser in a heat exchanger according to another embodiment of this application;
FIG. 19 is a diagram of a structure in which a plate condenser cooperates with an electronic expansion valve in a heat exchanger according to an embodiment of this application;
FIG. 20 is a cross-sectional diagram of a structure in which a plate condenser cooperates with an electronic expansion valve in a heat exchanger according to an embodiment of this application;
FIG. 21 is a diagram of another arrangement manner of a condenser heat exchange plate and an evaporator heat exchange plate in a heat exchanger according to an embodiment of this application;
FIG. 22 is a diagram of a structure of a refrigerant substrate in a heat exchanger according to an embodiment of this application; and
FIG. 23 is a diagram of a structure in which a refrigerant substrate is assembled with a plate condenser and a plate evaporator in a heat exchanger according to an embodiment of this application.

### DESCRIPTION OF EMBODIMENTS

The following describes the technical solutions in embodiments of this application with reference to the accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

In this specification, sequence numbers such as "first" and "second" of components are merely intended to distinguish between described objects, and do not have any sequence or technical meaning. Unless otherwise specified, "connection" in this application includes a direct connection and an indirect connection. In descriptions of this application, it should be understood that an orientation or a position relationship indicated by the term "upper", "lower", "front", "rear", "top", "bottom", "inside", "outside", or the like is based on an orientation or a position relationship shown in the accompanying drawings, and is merely intended to facilitate and simplify description of this application, but is not intended to indicate or imply that a described apparatus or element needs to have a specific orientation or be constructed and operated in a specific orientation. Therefore, such terms shall not be understood as a limitation on this application.

In this application, unless otherwise specified and limited, that a first feature is "on" or "below" a second feature may be that the first feature is in direct contact with the second feature, or may be that the first feature is in indirect contact with the second feature through an intermediate medium. In addition, that the first feature is "on" or "above" the second feature may be that the first feature is directly above or obliquely above the second feature, or may merely mean that a horizontal height of the first feature is greater than that of the second feature. That the first feature is "below" or "under" the second feature may be that the first feature is directly below or obliquely below the second feature, or may merely mean that a horizontal height of the first feature is less than that of the second feature.

This application provides an integrated plate heat exchanger, a temperature control apparatus, an energy storage device, and a vehicle. The heat exchanger includes an intermediate partition plate, a plate condenser, and a plate evaporator. The plate condenser and the plate evaporator are respectively fastened on two opposite sides of the intermediate partition plate, the plate condenser includes a plurality of condenser heat exchange plates that are stacked, and the plate evaporator includes a plurality of evaporator heat exchange plates that are stacked. At least one of a stacking direction of the plurality of condenser heat exchange plates or a stacking direction of the plurality of evaporator heat exchange plates is parallel to or perpendicular to the intermediate partition plate.

According to the heat exchanger provided in this application, the plate condenser and the plate evaporator are respectively fastened on the two opposites sides of the intermediate partition plate, so that a spacing distance between the plate condenser and the plate evaporator is shortened, both the condenser heat exchange plate and the evaporator heat exchange plate and the intermediate partition plate are arranged in a simple manner, and the plate condenser and the plate evaporator may be processed and assembled in an integrated manner. Therefore, manufacturing and assembly processes of the heat exchanger are simplified.

This application further provides a temperature control apparatus, including a radiator, a compressor, and the heat exchanger. The radiator is configured to cool a coolant flowing out of the plate condenser. The compressor is configured to boost pressure of a heat exchange working medium transmitted between the plate evaporator and the plate condenser. The temperature control apparatus in this application has a small volume, costs are low, and reliability is high.

This application further provides an energy storage device, including a battery pack and the temperature control apparatus. The temperature control apparatus is configured to control a temperature of the battery pack by using the heat exchanger. The energy storage device has a small volume and a compact structure. This facilitates internal space arrangement, and reliability is high.

This application further provides a vehicle, including a powertrain and the energy storage device provided in the third aspect. The energy storage device is configured to supply power to the powertrain. The vehicle also has a small volume and a compact structure. This facilitates internal space arrangement, and reliability is high.

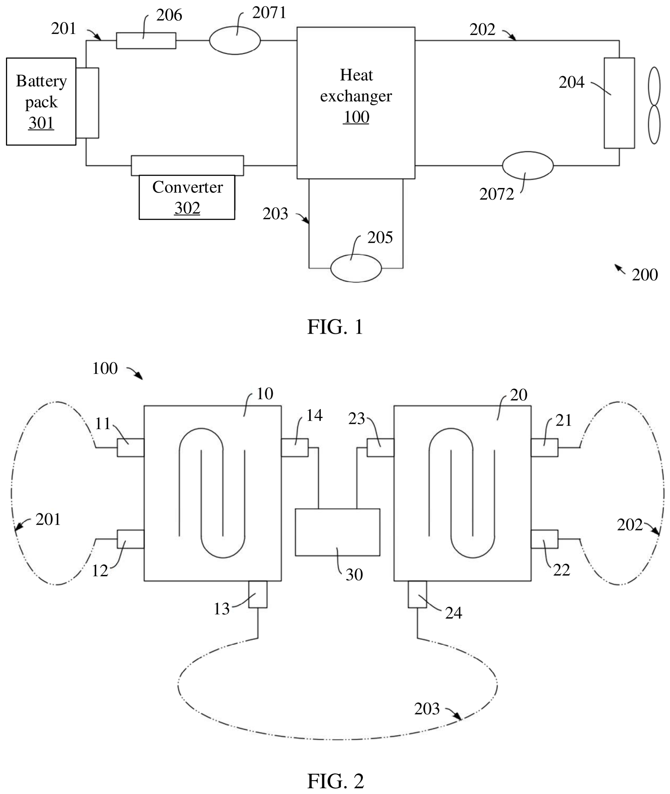

FIG. 1 is a diagram of a principle framework of a temperature control apparatus 200 in an energy storage device according to an embodiment of this application.

As shown in FIG. 1, the energy storage device in this application includes a battery pack 301 and the temperature control apparatus 200. The battery pack 301 is configured to: store electric energy, and release the stored electric energy when required. Heat may be generated in a process in which the battery pack 301 stores and releases electric energy. The battery pack 301 may be defined as a heat generation component in the energy storage device. The temperature control apparatus 200 is configured to control a temperature of the battery pack 301.

Specifically, the temperature control apparatus 200 includes a temperature control loop 201, a heat dissipation loop 202, a compressor loop 203, and a heat exchanger 100 that is also provided in this application. The temperature control loop 201 and the heat dissipation loop 202 are separately connected to the heat exchanger 100. A heat exchange working medium flows in the heat exchanger 100, and the heat exchange working medium is used to exchange heat with a coolant in the temperature control loop 201 and a coolant in the heat dissipation loop 202 separately. The compressor loop 203 is also connected to the heat exchanger 100, and the compressor loop 203 is configured to implement circulation of the heat exchange working medium in the heat exchanger 100.

The temperature control loop 201 is thermally attached to the battery pack 301. The temperature control apparatus 200 may dissipate heat for and cool the battery pack 301 by using the coolant circulating in the temperature control loop 201. In some scenarios, when an external temperature is low, the temperature control apparatus 200 further heats the battery pack 301 by using the coolant in the temperature control loop 201, to ensure reliable operation of the battery pack 301.

Therefore, the temperature control apparatus 200 in this application controls the temperature of the battery pack 301 by using the coolant in the temperature control loop 201. The temperature control apparatus 200 may dissipate heat for or heat the battery pack 301 based on an actual operation scenario of the energy storage device, so that the battery pack 301 operates under an appropriate temperature condition, and therefore, reliability of the energy storage device is improved.

In an embodiment, the coolant in the temperature control loop 201 is an ethylene glycol aqueous solution. For example, content of ethylene glycol in the coolant is 50%.

After the coolant in the temperature control loop 201 exchanges heat with the battery pack 301, a temperature of the coolant increases or decreases. A coolant whose temperature changes flows into the heat exchanger 100 and then exchanges heat with the heat exchange working medium. The heat exchange working medium is used to cool a coolant whose temperature increases or heat a coolant whose temperature decreases. In this way, a coolant flowing out of the heat exchanger 100 may circulate into the temperature control loop 201 and exchange heat with the battery pack 301 again.

For example, as shown in FIG. 1, the energy storage device may further include a converter 302. The converter 302 may include a power conversion system (power conversion system, PCS) and/or a direct current-direct current (direct current-direct current, DC-DC) converter. The power conversion system and the direct current-direct current converter may be separately configured to control the battery pack 301 to operate. The power conversion system and the direct current-direct current converter also generate heat in an operation process. Therefore, the power conversion system and the direct current-direct current converter may also be defined as a heat generation component in the energy storage device.

Correspondingly, the temperature control loop 201 of the temperature control apparatus 200 may further be thermally attached to the converter 302 (the power conversion system and/or the direct current-direct current converter), and the temperature control apparatus 200 further controls a temperature of the converter 302 by using the coolant in the temperature control loop 201.

As shown in FIG. 1, a same temperature control loop 201 in the temperature control apparatus 200 is thermally attached to the battery pack 301 and the converter 302 in sequence, and the coolant in the temperature control loop 201 exchanges heat with the battery pack 301 and the converter 302 in sequence. In some other embodiments, there may alternatively be a plurality of temperature control loops 201 in the temperature control apparatus 200. The temperature control loops 201 are connected through multi-way valves (not shown in the figure) and implement coolant distribution. Coolants in different temperature control loops 201 exchange heat with heat generation components (for example, the battery pack 301 and the converter 302) respectively. By such configuration, a temperature of each heat generation component can be independently controlled based on different operation modes of the temperature control apparatus 200.

As shown in FIG. 1, a radiator 204 is further disposed in the heat dissipation loop 202 in the temperature control apparatus 200. The radiator 204 is configured to make a coolant flowing through the heat dissipation loop 202 exchange heat with external air, so that the coolant dissipates heat to cool down or absorbs heat to increase the temperature. In other words, the radiator 204 is configured to cool the coolant flowing into the heat dissipation loop 202 from the heat exchanger 100. A compressor 205 is further disposed in the compressor loop 203. The compressor 205 is configured to boost pressure of the heat exchange working medium in the heat exchanger 100, to drive the heat exchange working medium to circulate in the heat exchanger 100. In the heat exchanger 100, the heat exchange working medium exchanges heat with the coolant in the temperature control loop 201 and the coolant in the heat dissipation loop 202 separately.

For details, refer to a diagram of an internal framework structure of the heat exchanger 100 shown in FIG. 2.

The heat exchanger 100 in this application includes a plate condenser 10, a plate evaporator 20, and an electronic expansion valve 30. The plate condenser 10 includes a first coolant inlet 11, a first coolant outlet 12, a first refrigerant inlet 13, and a first refrigerant outlet 14. The heat dissipation loop 202 is connected between the first coolant inlet 11 and the second coolant outlet 22. The coolant in the heat dissipation loop 202 may flow into the plate condenser 10. In other words, the radiator 204 is configured to cool the coolant flowing out of the plate condenser 10.

An end of the compressor loop 203 is connected to the first refrigerant inlet 13, and the first refrigerant outlet 14 is connected to an inlet 31 of the electronic expansion valve 30. The compressor loop 203 is configured to provide a heat exchange working medium to the plate condenser 10 through the first refrigerant inlet 13, and the heat exchange working medium exchanges heat with the coolant in the heat dissipation loop 202 in the plate condenser 10.

The plate evaporator 20 includes a second coolant inlet 21, a second coolant outlet 22, a second refrigerant inlet 23, and a second refrigerant outlet 24. The temperature control loop 201 is connected between the second coolant inlet 21 and the second coolant outlet 22. The coolant in the temperature control loop 201 may flow into the plate evaporator 20.

The other end of the compressor loop 203 is connected to the second refrigerant outlet 24, and the second refrigerant inlet 23 is connected to an outlet 32 of the electronic expansion valve 30. In other words, the electronic expansion valve 30 is connected between the first refrigerant outlet 14 of the plate condenser 10 and the second refrigerant inlet 23 of the plate evaporator 20, and the heat exchange working medium flowing out of the plate condenser 10 may flow into the plate evaporator 20 through the electronic expansion valve 30. In the plate evaporator 20, the coolant in the temperature control loop 201 exchanges heat with the heat exchange working medium. The compressor 205 is configured to boost pressure of a heat exchange working medium between the plate evaporator 20 and the plate condenser 10.

With reference to FIG. 1 and FIG. 2, in the energy storage device provided in this application, the temperature control apparatus 200 controls temperatures of the heat generation components (the battery pack 301 and the converter 302) of the energy storage device by using the temperature control loop 201. An example in which the temperature control apparatus 200 dissipates heat for and cools the heat generation component is used. The coolant in the temperature control loop 201 exchanges heat with the heat generation component, and the temperature of the coolant increases, to bring heat generated by the heat generation component during operation to the plate evaporator 20.

In the plate evaporator 20, the coolant whose temperature increases exchanges heat with the heat exchange working medium. When a temperature of the heat exchange working medium increases, the temperature of the coolant reduces. The coolant whose temperature reduces flows into the temperature control loop 201 through the first coolant outlet 12 again, and exchanges heat with the heat generation component again, to achieve effect of cyclic heat dissipation.

The heat exchange working medium whose temperature increases is in a gas-liquid two-phase state. The heat dissipation working medium flows into the compressor 205 through the second refrigerant outlet 24. The compressor 205 is configured to boost pressure of the heat exchange working medium, so that the heat exchange working medium changes to a liquid state. The liquid heat exchange working medium flows into the plate condenser 10 through the first refrigerant inlet 13.

In the plate condenser 10, the liquid heat exchange working medium whose temperature increases exchanges heat with the coolant in the heat dissipation loop 202. After the temperature of the heat exchange working medium reduces, the heat exchange working medium flows into the electronic expansion valve 30 through the first refrigerant outlet 14. The electronic expansion valve 30 is configured to reduce pressure of the heat exchange working medium whose temperature reduces, so that the heat exchange working medium changes to a gas state or a gas-liquid two-phase state. The heat exchange working medium whose pressure reduces flows into the plate evaporator 20 through the second refrigerant inlet 23, and exchange heat with the coolant in the temperature control loop 201 again, to achieve effect of cyclic heat dissipation of the heat exchange working medium on the coolant in the temperature control loop 201. In addition, when the heat exchange working medium in the gas state or the gas-liquid two-phase state exchanges heat with the coolant, heat absorption efficiency of the heat exchange working medium is higher, and heat may be better dissipated for the coolant in the temperature control loop 201.

The coolant in the heat dissipation loop 202 enters the plate condenser 10 through the first coolant inlet 11 of the plate condenser 10. After the coolant in the heat dissipation loop 202 exchanges heat with the heat exchange working medium in the plate condenser 10, the temperature of the coolant increases, and the coolant whose temperature increases flows to the radiator 204 through the first coolant outlet 12 of the plate condenser 10. The coolant in the heat dissipation loop 202 exchanges heat with the external air in the radiator 204, to take the heat away from the temperature control apparatus 200. The coolant whose temperature reduces enters the plate condenser 10 through the first coolant inlet 11 again, and exchanges heat with the heat exchange working medium in the plate condenser 10 again, to achieve effect of cyclic heat dissipation on the heat exchange working medium.

Therefore, the temperature control apparatus 200 in this application exchanges heat with the heat generation component in the energy storage device by using the coolant in the temperature control loop 201, and brings the heat generated by the heat generation component during operation to the plate evaporator 20. The plate evaporator 20 transfers heat of the coolant in the temperature control loop 201 to the heat exchange working medium, and the heat exchange working medium brings the heat to the plate condenser 10 through the compressor loop 203. The plate condenser 10 further transfers the heat of the heat exchange working medium to the coolant in the heat dissipation loop 202, and the coolant in the heat dissipation loop 202 brings the heat to the radiator 204.

In the radiator 204, the coolant in the heat dissipation loop 202 exchanges heat with the external air, to discharge the heat from the temperature control apparatus 200. In this application, the temperature control apparatus 200 takes the heat generated by the heat generation component during operation away from the energy storage device in combination with the radiator 204 through two heat exchanges in the heat exchanger 100, and therefore, controls the temperature of the heat generation component.

It may be understood that, when the temperature control apparatus 200 needs to heat the heat generation component, the temperature of the external air is transferred to the coolant in the temperature control loop 201 through the radiator 204, the plate condenser 10, and the plate evaporator 20 in sequence, and then the temperature control loop 201 transfers heat of the external air to the heat generation component, to ensure reliable operation of the heat generation component.

Refer to FIG. 1. In an embodiment, the temperature control apparatus 200 further includes an electric heating module 206. The electric heating module 206 is disposed in the temperature control loop 201, and the electric heating module 206 is configured to heat the coolant in the temperature control loop 201, so that when the external temperature is low and the heat of the external air cannot ensure normal operation of the heat generation component, the electric heating module 206 increases the temperature of the coolant in the temperature control loop 201 to ensure reliable operation of the heat generation component.

In an embodiment, the temperature control apparatus 200 includes a first water pump 2071. The first water pump 2071 is disposed in the temperature control loop 201. The first water pump 2071 is configured to drive the coolant in the temperature control loop 201 to flow.

In an embodiment, the temperature control apparatus 200 includes a second water pump 2072. The second water pump 2072 is disposed in the heat dissipation loop 202. The second water pump 2072 is configured to drive the coolant in the heat dissipation loop 202 to flow.

It may be understood that the temperature control apparatus 200 provided in the foregoing embodiment is also applicable to a vehicle provided in this application. When the temperature control apparatus 200 is disposed in an independent energy storage device, the energy storage device may be a photovoltaic energy storage device. The temperature control apparatus 200 is configured to ensure reliable operation of the heat generation component (for example, a battery pack and a converter) in the energy storage device in different scenarios. When the energy storage device is used in the vehicle, the energy storage device may supply power to a powertrain of the vehicle. The temperature control apparatus 200 may also ensure reliable traveling of the vehicle.

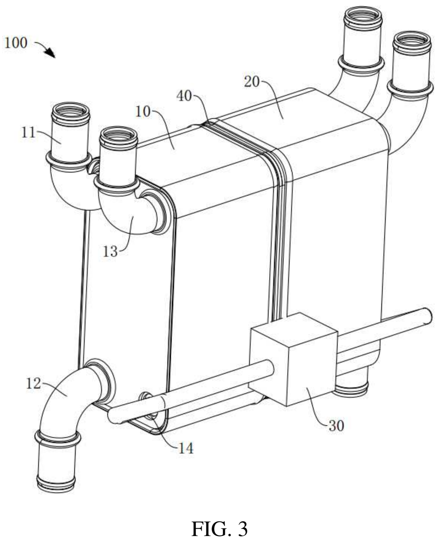

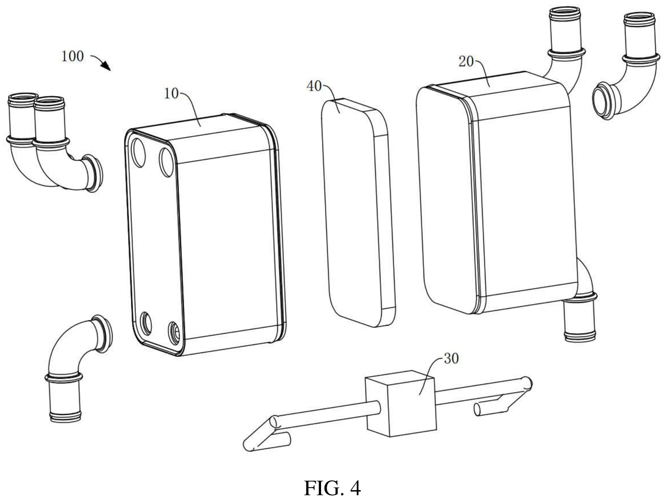

Refer to a diagram of a structure of a heat exchanger 100 according to an embodiment of this application shown in FIG. 3 and an exploded view of the structure of the heat exchanger 100 shown in FIG. 4.

The heat exchanger 100 in this application further includes an intermediate partition plate 40. The plate condenser 10 and the plate evaporator 20 are respectively fastened on two opposite sides of the intermediate partition plate 40. The plate condenser 10 and the plate evaporator 20 are connected to form an integrated structure through the intermediate partition plate 40. The electronic expansion valve 30 is located on a side of the plate condenser 10 and the plate evaporator 20, and a projection of the electronic expansion valve 30 and at least one of projections of the plate condenser 10, the intermediate partition plate 40, and the plate evaporator 20 partially overlap in an arrangement direction of the plate condenser 10 and the plate evaporator 20. In an embodiment, the electronic expansion valve 30 is attached to the plate condenser 10, the intermediate partition plate 40, and the plate evaporator 20.

The first coolant inlet 11, the first coolant outlet 12, the first refrigerant inlet 13, and the first refrigerant outlet 14 of the plate condenser 10 are all located on a surface that is away from the intermediate partition plate 40 (which are marked on pipes communicating with inlets and outlets in the figure). The first coolant inlet 11, the first coolant outlet 12, and the first refrigerant inlet 13 all communicate with the outside (the heat dissipation loop 202 and the compressor loop 203) through pipes. The first refrigerant outlet 14 of the plate condenser 10 communicates with the inlet 31 of the electronic expansion valve 30 on a side through a pipe.

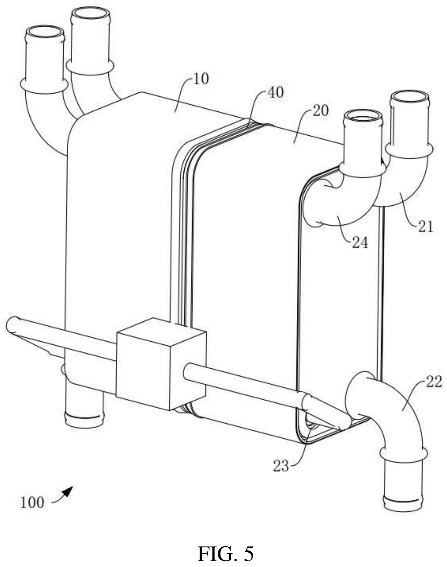

As shown in FIG. 5, on a side of the plate evaporator 20, the second coolant inlet 21, the second coolant outlet 22, the second refrigerant inlet 23, and the second refrigerant outlet 24 are also located on a surface that is of the plate evaporator 20 and that is away from the intermediate partition plate 40. The second coolant inlet 21, the second coolant outlet 22, and the second refrigerant outlet 24 all also communicate with the outside (the temperature control loop 201 and the compressor loop 203) through pipes. The second refrigerant inlet 23 of the plate evaporator 20 is connected to the outlet 32 of the electronic expansion valve 30 on a side through a pipe.

In comparison with a solution in which a condenser and an evaporator are separately and independently disposed in a conventional technology, in this application, the plate condenser 10 of the heat exchanger 100 and the plate evaporator 20 are arranged side by side through the intermediate partition plate 40, so that the heat exchanger 100 has a more compact structure. A volume of the heat exchanger 100 reduces, and an overall volume of the temperature control apparatus 200 also reduces. This facilitates arrangement of the temperature control apparatus 200 in the energy storage device or the vehicle, and less internal space of the energy storage device or the vehicle is occupied.

In addition, because a distance between the plate condenser 10 and the plate evaporator 20 is shortened, the electronic expansion valve 30 may be connected between the first refrigerant outlet 14 of the plate condenser 10 and the second refrigerant inlet 23 of the plate evaporator 20 through a short pipe. A length of the pipe at the electronic expansion valve 30 is shortened, so that a risk of pipe leakage is reduced, and reliability of the heat exchanger 100 is improved. When the electronic expansion valve 30 is close to the plate condenser 10 and the plate evaporator 20, the volume of the heat exchanger 100 is further reduced, and the length of the pipe connected to the electronic expansion valve 30 is further reduced.

In an embodiment, the plate condenser 10 and the plate evaporator 20 each may be made of metal (for example, nickel). The intermediate partition plate 40 may also be made of metal (for example, aluminum). In this case, the plate condenser 10, the intermediate partition plate 40, and the plate evaporator 20 may be welded and fastened in a same process. In other words, the plate condenser 10, the plate evaporator 20, and the intermediate partition plate 40 may be integrally formed through welding. By such an arrangement, an assembly process of the heat exchanger 100 is simplified, and costs can be reduced.

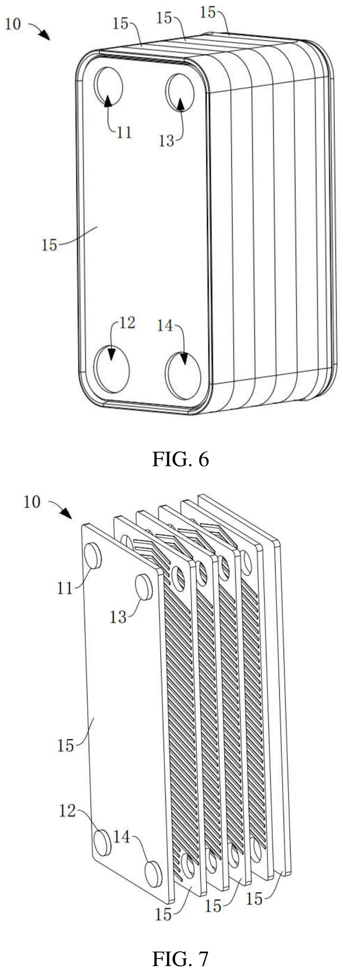

Refer to a diagram of a structure of a plate condenser 10 according to an embodiment of this application shown in FIG. 6 and an exploded view of the structure of the plate condenser 10 shown in FIG. 7.

In an embodiment, the plate condenser 10 includes a plurality of condenser heat exchange plates 15. The plurality of condenser heat exchange plates 15 are sequentially stacked and fastened, and any two adjacent condenser heat exchange plates 15 are attached to each other. A single condenser heat exchange plate 15 has two opposite surfaces in a thickness direction of the condenser heat exchange plate 15, and at least one surface is attached to another condenser heat exchange plate 15. In this embodiment, the surface that is of the single condenser heat exchange plate 15 and that is attached to the another condenser heat exchange plate 15 is defined as a condenser attachment surface 151. In this case, the single condenser heat exchange plate 15 has at least one condenser attachment surface 151.

It may be understood that, in a direction in which the plurality of condenser heat exchange plates 15 are stacked, other than condenser heat exchange plates 15 at two ends that each have one condenser attachment surface 151, condenser heat exchange plates 15 each have two condenser attachment surfaces 151.

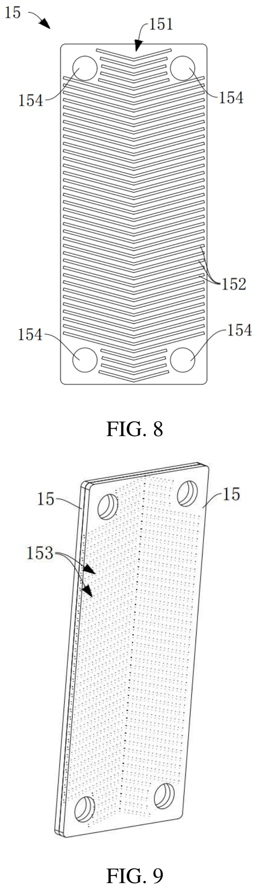

At least one of two opposite condenser attachment surfaces 151 of two condenser heat exchange plates 15 that are attached to each other is provided with a groove 152. Specifically, with reference to FIG. 8, the condenser attachment surface 151 is provided with a plurality of grooves 152, and each groove 152 forms, between two adjacent condenser heat exchange plates 15, a gap for liquid to flow through. When condenser attachment surfaces 151 of the two adjacent condenser heat exchange plates 15 are attached to each other, a gap formed by each groove 152 is sealed, and an internal passage 153 (as shown in FIG. 9) of the plate condenser 10 may be formed between the two condenser heat exchange plates 15 that are attached to each other. When the plurality of condenser heat exchange plates 15 are sequentially stacked and attached, a plurality of internal passages 153 of the plate condenser 10 are formed in the plate condenser 10, and each internal passage 153 of the plate condenser 10 is arranged in the stacking direction of the plurality of condenser heat exchange plates 15. In other words, in this embodiment, the plurality of internal passages 153 of the plate condenser 10 are arranged in parallel with the intermediate partition plate 40.

Further, each condenser heat exchange plate 15 shown in FIG. 8 is further provided with four through holes 154. The four through holes 154 are spaced apart from each other, and each through hole 154 penetrates the condenser heat exchange plate 15 in a thickness direction of the condenser heat exchange plate 15. Positions of through holes 154 of the condenser heat exchange plates 15 are the same. After the plurality of condenser heat exchange plates 15 are stacked, a plurality of through holes 154 at a same position are sequentially communicated, to form four channels in the plate condenser 10. The four channels may be respectively configured to communicate with the first coolant inlet 11, the first coolant outlet 12, the first refrigerant inlet 13, and the first refrigerant outlet 14 of the plate condenser 10.

Specifically, pipes in the heat dissipation loop 202 in the temperature control apparatus 200 may respectively extend, through the first coolant inlet 11 and the first coolant outlet 12, into two groups of channels formed through communication of the plurality of through holes 154. The pipe in the heat dissipation loop 202 may communicate with a part of the internal passages 153 of the plate condenser 10. A coolant flowing from the first coolant inlet 11 may flow into the plurality of internal passages 153 of the plate condenser 10 that are communicated, and flow back to the heat dissipation loop 202 from the first coolant outlet 12. The part of the internal passages 153 communicating with the first coolant inlet 11 and the first coolant outlet 12 of the plate condenser 10 may form a coolant passage of the plate condenser 10. In other words, the first coolant inlet 11 communicates with the first coolant outlet 12 through the coolant passage inside the plate condenser 10.

Pipes in the compressor loop 203 may respectively extend, through the first refrigerant inlet 13 and the first refrigerant outlet 14, into other two groups of channels formed through communication of the plurality of through holes 154. The pipe in the compressor loop 203 may communicate with another part of the internal passages 153 of the plate condenser 10. A heat exchange working medium flowing from the first refrigerant inlet 13 may flow in the plurality of internal passages 153 of the plate condenser 10 that are communicated, and flow into the inlet 31 of the electronic expansion valve 30 from the first refrigerant outlet 14. The another part of the internal passages 153 communicating with the first refrigerant inlet 13 and the first refrigerant outlet 14 of the plate condenser 10 may form a refrigerant passage of the plate condenser 10. In other words, the first refrigerant inlet 13 communicates with the first refrigerant outlet 14 through the refrigerant passage inside the plate condenser 10.

The plurality of internal passages 153 of the plate condenser 10 are arranged in the stacking direction of the plurality of condenser heat exchange plates 15, and the internal passage 153 of the plate condenser 10 is constructed in each condenser heat exchange plate 15. Therefore, when the coolant and the heat exchange working medium respectively flow in different internal passages 153 of the plate condenser 10, the coolant and the heat exchange working medium can exchange heat through thermal conduction of the condenser heat exchange plate 15. In addition, the plate condenser 10 also implements heat exchange between the coolant in the heat dissipation loop 202 and the heat exchange working medium in the compressor loop 203.

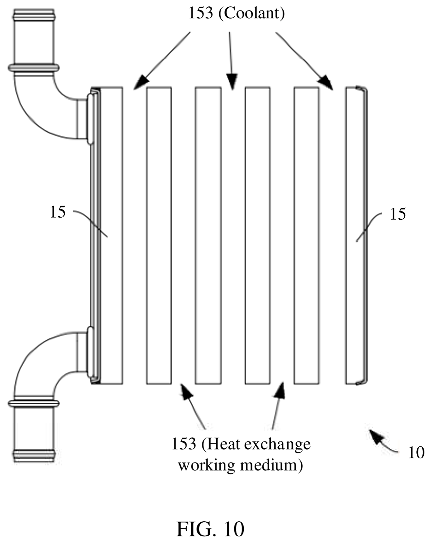

For example, for the plurality of internal passages 153 of the plate condenser 10, a part of the internal passages 153 communicating the first coolant inlet 11 with the first coolant outlet 12 and a part of the internal passages 153 communicating the first refrigerant inlet 13 with the first refrigerant outlet 14 may be alternately arranged. Refer to FIG. 10. One internal passage 153 communicating the first refrigerant inlet 13 with the first refrigerant outlet 14 is provided between any two internal passages 153 communicating the first coolant inlet 11 with the first coolant outlet 12. Conversely, one internal passage 153 communicating the first coolant inlet 11 with the first coolant outlet 12 is also provided between any two internal passages 153 communicating the first refrigerant inlet 13 with the first refrigerant outlet 14.

Therefore, a contact area between the coolant and the heat exchange working medium in the plate condenser 10 is large, so that effect of heat exchange between the coolant and the heat exchange working medium can be improved.

It should be noted that, as shown in FIG. 8 and FIG. 9, one of the two opposite condenser attachment surfaces 151 is provided with the groove 152, to form the internal passage 153 of the plate condenser 10. However, in some other embodiments, the two opposite condenser attachment surfaces 151 are both provided with grooves 152, and the two grooves 152 are jointly configured to form the internal passage 153 of the plate condenser 10. The grooves 152 on the two opposite condenser attachment surfaces 151 may be symmetrically provided, to increase a cross-sectional area of the internal passage 153 of the plate condenser 10, and allow a larger flow rate of the coolant or the heat exchange working medium to flow through. The grooves 152 on the two opposite condenser attachment surfaces 151 may alternatively be disposed in a staggered manner, to extend a path of the internal passage 153, and improve the effect of heat exchange between the coolant and the heat exchange working medium.

In an embodiment, one condenser heat exchange plate 15 is arranged adjacent to the intermediate partition plate 40, and is fastened to one side surface of the intermediate partition plate 40. A gap between the condenser heat exchange plate 15 and the intermediate partition plate 40 may also form the internal passage 153 of the plate condenser 10. When the intermediate partition plate 40 is attached to the condenser heat exchange plate 15, the groove 152 may be provided on an attachment surface of the intermediate partition plate 40 and/or a condenser attachment surface 151 of the condenser heat exchange plate 15 to which the intermediate partition plate 40 is attached, so that the gap between the intermediate partition plate 40 and the condenser heat exchange plate 15 can form the internal passage 153 of the plate condenser 10, and this extends the internal passage 153 of the plate condenser 10 increases, achieving better heat exchanger effect.

In an embodiment, a connection line between the first coolant inlet 11 and the first coolant outlet 12 and a connection line between the first refrigerant inlet 13 and the first refrigerant outlet 14 are parallel to the intermediate partition plate 40, and the connection line between the first coolant inlet 11 and the first coolant outlet 12 is parallel to the connection line between the first refrigerant inlet 13 and the first refrigerant outlet 14, to facilitate connections between the heat exchanger 100 and external runners, and facilitate arrangement of the internal passage of the plate condenser 10.

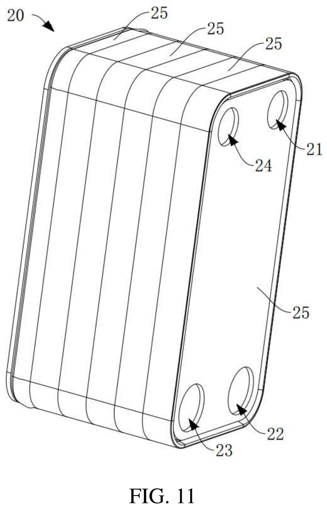

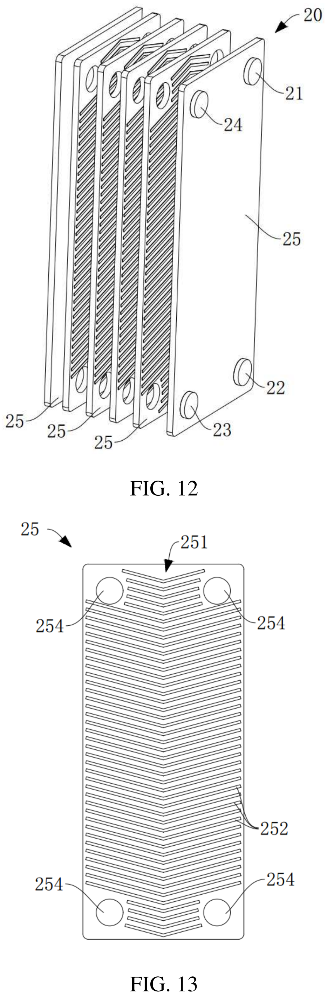

Refer to a diagram of a structure of a plate evaporator 20 according to an embodiment of this application shown in FIG. 11 and an exploded view of the structure of the plate evaporator 20 as shown in FIG. 12.

In an embodiment, the plate evaporator 20 includes a plurality of evaporator heat exchange plates 25. The plurality of evaporator heat exchange plates 25 are sequentially stacked and fastened, and any two adjacent evaporator heat exchange plates 25 are attached to each other. A single evaporator heat exchange plate 25 has two opposite surfaces in a thickness direction of the evaporator heat exchange plate 25, and at least one surface is attached to another evaporator heat exchange plate 25. In this embodiment, the surface that is of the single evaporator heat exchange plate 25 and that is attached to the another evaporator heat exchange plate 25 is defined as an evaporator attachment surface 251. In this case, the single evaporator heat exchange plate 25 has at least one evaporator attachment surface 251.

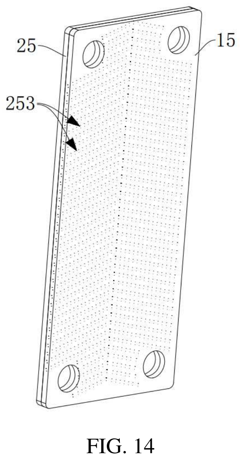

At least one of two opposite evaporator attachment surfaces 251 of two evaporator heat exchange plates 25 that are attached to each other is provided with a groove 252. Specifically, with reference to FIG. 13, the evaporator attachment surface 251 is provided with a plurality of grooves 252, and each groove 252 forms, between two adjacent evaporator heat exchange plates 25, a gap for liquid to flow through. When condenser attachment surfaces 151 of the two adjacent evaporator heat exchange plates 25 are attached to each other, a gap formed by each groove 252 is sealed, and an internal passage 253 (as shown in FIG. 14) of the plate evaporator 20 may be formed between the two evaporator heat exchange plates 25 that are attached to each other. When the plurality of evaporator heat exchange plates 25 are sequentially stacked and attached, a plurality of internal passages 253 of the plate evaporator 20 are formed in the plate evaporator 20, and each internal passage 253 of the plate evaporator 20 is arranged in the stacking direction of the plurality of evaporator heat exchange plates 25. In other words, in this embodiment, the plurality of internal passages 253 of the plate evaporator 20 are arranged in parallel with the intermediate partition plate 40.

In an embodiment, each evaporator heat exchange plate 25 shown in FIG. 13 is further provided with four through holes 254. The four through holes 254 are spaced apart from each other, and each through hole 254 penetrates the evaporator heat exchange plate 25 in a thickness direction of the evaporator heat exchange plate 25. Positions of through holes 254 of the evaporator heat exchange plates 25 are the same. After the plurality of evaporator heat exchange plates 25 are stacked, a plurality of through holes 254 at a same position are sequentially communicated, to form four channels in the plate evaporator 20. The four channels may be respectively configured to communicate with the second coolant inlet 21, the second coolant outlet 22, the second refrigerant inlet 23, and the second refrigerant outlet 24 of the plate evaporator 20.

Specifically, pipes in the temperature control loop 201 in the temperature control apparatus 200 may respectively extend, through the second coolant inlet 21 and the second coolant outlet 22, into two groups of channels formed through communication of the plurality of through holes 254. The pipe in the temperature control loop 201 may communicate with a part of the internal passages 253 of the plate evaporator 20. A coolant flowing from the second coolant inlet 21 may flow in the plurality of internal passages 253 of the plate evaporator 20 that are communicated, and flow back to the temperature control loop 201 from the second coolant outlet 22. The part of the internal passages 253 communicating with the second coolant inlet 21 and the second coolant outlet 22 of the plate evaporator 20 may form a coolant passage of the plate evaporator 20. In other words, the second coolant inlet 21 communicates with the second coolant outlet 22 through the coolant passage inside the plate evaporator 20.

Pipes in the compressor loop 203 may respectively extend, through the second refrigerant inlet 23 and the second refrigerant outlet 24, into other two groups of channels formed through communication of the plurality of through holes 254. The pipe in the compressor loop 203 may communicate with another part of the internal passages 253 of the plate evaporator 20. A heat exchange working medium flowing out of the outlet 32 of the electronic expansion valve 30 may flow into the plurality of internal passages 253 of the plate evaporator 20 through the second refrigerant inlet 23, and flow out of the plate evaporator 20 from the second refrigerant outlet 24. The another part of the internal passages 253 communicating with the second refrigerant inlet 23 and the second refrigerant outlet 24 of the plate evaporator 20 may form a refrigerant passage of the plate evaporator 20. In other words, the second refrigerant inlet 23 communicates with the second refrigerant outlet 24 through the refrigerant passage inside the plate evaporator 20.

The plurality of internal passages 253 of the plate evaporator 20 are arranged in the stacking direction of the plurality of evaporator heat exchange plates 25, and the internal passage 253 of the plate evaporator 20 is constructed in each evaporator heat exchange plate 25. Therefore, when the coolant and the heat exchange working medium respectively flow in different internal passages 253 of the plate evaporator 20, the coolant and the heat exchange working medium can also exchange heat through thermal conduction of the evaporator heat exchange plate 25. In addition, the plate evaporator 20 also implements heat exchange between the coolant in the temperature control loop 201 and the heat exchange working medium in the compressor loop 203.

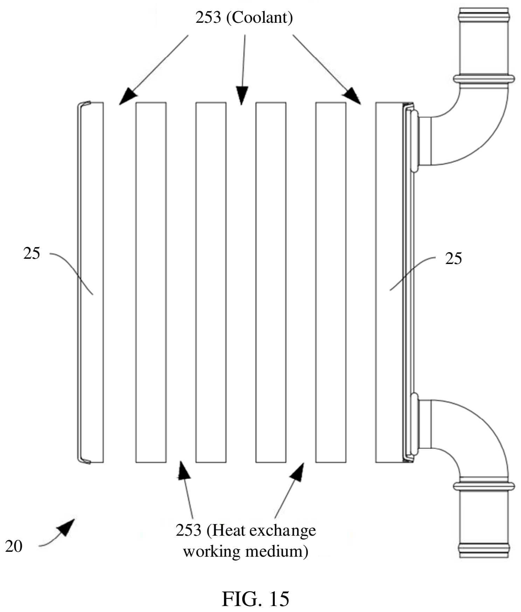

For example, for the plurality of internal passages 253 of the plate evaporator 20, a part of the internal passages 253 communicating the second coolant inlet 21 with the second coolant outlet 22 and a part of the internal passages 253 communicating the second refrigerant inlet 23 with the second refrigerant outlet 24 may be alternately arranged. Refer to FIG. 15. One internal passage 253 communicating the second refrigerant inlet 23 with the second refrigerant outlet 24 is provided between any two internal passages 253 communicating the second coolant inlet 21 with the second coolant outlet 22. Conversely, one internal passage 253 communicating the second coolant inlet 21 with the second coolant outlet 22 is also provided between any two internal passages 253 communicating the second refrigerant inlet 23 with the second refrigerant outlet 24.

Therefore, a contact area between the coolant and the heat exchange working medium in the plate evaporator 20 is large, so that effect of heat exchange between the coolant and the heat exchange working medium can be improved.

It should be noted that, as shown in FIG. 13 and FIG. 14, one of the two opposite evaporator attachment surfaces 251 is provided with the groove 252, to form the internal passage 253 of the plate evaporator 20. However, in some other embodiments, the two opposite evaporator attachment surfaces 251 are both provided with grooves 252, and the two grooves 252 are jointly configured to form the internal passage 253 of the plate evaporator 20. The grooves 252 on the two opposite evaporator attachment surfaces 251 may be symmetrically provided, to increase a cross-sectional area of the internal passage 253 of the plate evaporator 20, and allow a larger flow rate of the coolant or the heat exchange working medium to flow through. The grooves 252 on the two opposite evaporator attachment surfaces 251 may alternatively be disposed in a staggered manner, to extend a path of the internal passage 253, and improve the effect of heat exchange between the coolant and the heat exchange working medium.

In an embodiment, one evaporator heat exchange plate 25 is arranged adjacent to the intermediate partition plate 40, and is fastened to one side surface of the intermediate partition plate 40. A gap between the evaporator heat exchange plate 25 and the intermediate partition plate 40 may also form the internal passage 253 of the plate evaporator 20. When the intermediate partition plate 40 is attached to the evaporator heat exchange plate 25, the groove 252 may be provided on an attachment surface of the intermediate partition plate 40 and/or an evaporator attachment surface 251 of the evaporator heat exchange plate 25 to which the intermediate partition plate 40 is attached, so that the gap between the intermediate partition plate 40 and the evaporator heat exchange plate 25 can form the internal passage 253 of the plate evaporator 20, and this extends the internal passage 253 of the plate evaporator 20, achieving better heat exchanger effect.

In an embodiment, a connection line between the second coolant inlet 21 and the second coolant outlet 22 and a connection line between the second refrigerant inlet 23 and the second refrigerant outlet 24 are parallel to the intermediate partition plate 40, and the connection line between the second coolant inlet 21 and the second coolant outlet 22 is parallel to the connection line between the second refrigerant inlet 23 and the second refrigerant outlet 24, to facilitate connections between the heat exchanger 100 and external runners, and facilitate arrangement of the internal passage of the plate condenser 10.

In the foregoing embodiment, the plurality of condenser heat exchange plates 15 are stacked and fastened to form the plate condenser 10, and the plurality of evaporator heat exchange plates 25 are stacked and fastened to form the plate evaporator 20. Structures of the condenser heat exchange plate 15 and the evaporator heat exchange plate 25 are simple, and the plate condenser 10 and the plate evaporator 20 are easy to manufacture. In addition, the groove 152 on the condenser heat exchange plate 15 and the groove 252 on the evaporator heat exchange plate 25 also facilitate processing. The internal passage 153 of the plate condenser 10 and the internal passage 253 of the plate evaporator 20 that are formed through attachment each have good sealing performance, so that reliability of the plate condenser 10 and the plate evaporator 20 can be improved.

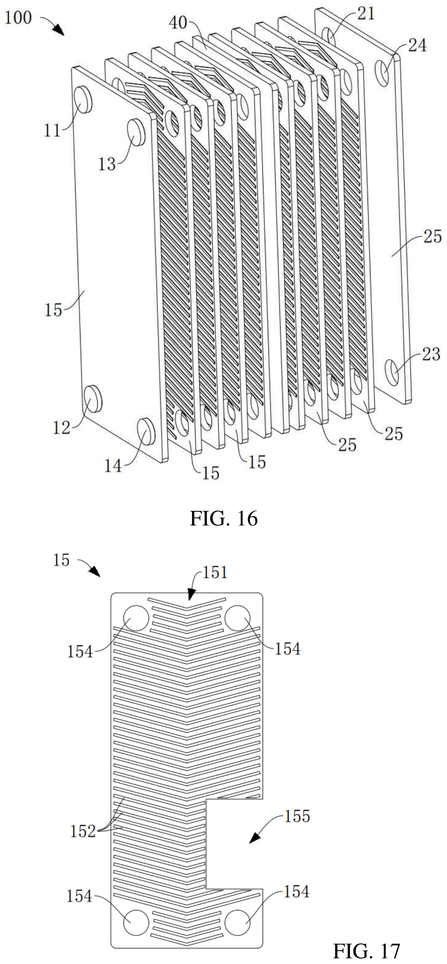

For the heat exchanger 100 in this application, in the embodiment shown in FIG. 16, the stacking direction of the plurality of condenser heat exchange plates 15 is parallel to the intermediate partition plate 40. Alternatively, the stacking direction of the plurality of evaporator heat exchange plates 25 is parallel to the intermediate partition plate 40. That is, the heat exchanger 100 is of a sandwich structure. In an embodiment, in the arrangement direction of the plate condenser 10 and the plate evaporator 20, an area of the intermediate partition plate 40 is less than or equal to areas of the plurality of condenser heat exchange plates 15 or areas of the plurality of evaporator heat exchange plates 25. The area of the intermediate partition plate 40 is less than the area of the condenser heat exchange plate 15 or the evaporator heat exchange plate 25, so that a contour size of the intermediate partition plate 40 can be controlled, to prevent the intermediate partition plate 40 from extending out of an outer contour of the condenser heat exchange plate 15 or the evaporator heat exchange plate 25 and prevent an overall outline size of the heat exchanger 100 from expanding.

In an embodiment, in the arrangement direction of the plate condenser 10 and the plate evaporator 20, a distance size between the plate condenser 10 and the plate evaporator 20 is equal to a thickness size of the intermediate partition plate 40. Therefore, the plate condenser 10 and the plate evaporator 20 can be attached to two opposite outer surfaces of the intermediate partition plate 40, to reduce the overall volume of the heat exchanger 100.

In an embodiment, the plurality of condenser heat exchange plates 15 may be stacked and fastened through welding, to form the plate condenser 10. The two adjacent condenser heat exchange plates 15 are attached and then welded. This helps implement sealing of the internal passages 153 of the plate condenser 10. In an embodiment, the plurality of condenser heat exchange plates 15 and the intermediate partition plate 40 may be further synchronously formed through welding, to simplify a manufacturing process of the heat exchanger 100.

In an embodiment, the plurality of evaporator heat exchange plates 25 may be stacked and fastened through welding, to form the plate evaporator 20. The two adjacent evaporator heat exchange plates 25 are attached and then welded. This helps implement sealing of the internal passages 253 of the plate evaporator 20. In an embodiment, the plurality of evaporator heat exchange plates 25 and the intermediate partition plate 40 may be further synchronously formed through welding, to simplify the manufacturing process of the heat exchanger 100.

In an embodiment, the plurality of condenser heat exchange plates 15, the plurality of evaporator heat exchange plates 25, and the intermediate partition plate 40 may be synchronously formed through welding, to further simplify the manufacturing process of the heat exchanger 100.

In an embodiment, a housing (not shown in the figure) may be further disposed in the heat exchanger 100, where the housing is configured to cover the plate condenser 10, the intermediate partition plate 40, and the plate evaporator 20. In some embodiments, the housing of the heat exchanger 100 may alternatively be configured to cover the plate condenser 10 and the plate evaporator 20, and the intermediate partition plate 40 is fastened to housings covering the plate condenser 10 and the plate evaporator 20 separately.

In an embodiment, the stacking direction of the plurality of condenser heat exchange plates 15 is parallel to an arrangement direction of the plate condenser 10 and the intermediate partition plate 40. As shown in FIG. 16, in this embodiment, the first coolant inlet 11, the first coolant outlet 12, the first refrigerant inlet 13, and the first refrigerant outlet 14 are all located on a surface that is of the plate condenser 10 and that is away from the intermediate partition plate 40. In other words, the first coolant inlet 11, the first coolant outlet 12, the first refrigerant inlet 13, and the first refrigerant outlet 14 are all located on a condenser heat exchange plate 15 that is of the plate condenser 10 and that is farthest away from the intermediate partition plate 40. In this case, the heat dissipation loop 202 and the compressor loop 203 each may communicate with ports through pipes.

In an embodiment, the stacking direction of the plurality of evaporator heat exchange plates 25 is also parallel to an arrangement direction of the plate evaporator 20 and the intermediate partition plate 40. In this case, the second coolant inlet 21, the second coolant outlet 22, the second refrigerant inlet 23, and the second refrigerant outlet 24 are all located on a surface that is of the plate evaporator 20 and that is away from the intermediate partition plate 40, that is, are all located on an evaporator heat exchange plate 25 that is of the plate evaporator 20 and that is farthest away from the intermediate partition plate 40. In this case, the temperature control loop 201 and the compressor loop 203 each may also communicate with ports through pipes.

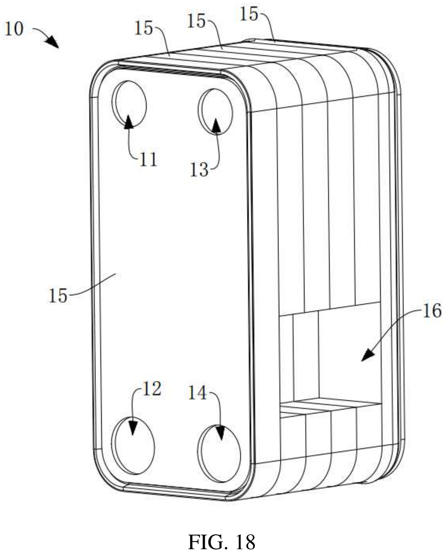

Refer to FIG. 17. In an embodiment, a part of the condenser heat exchange plates 15 in the plate condenser 10 are provided with notches 155. The notch 155 penetrates the condenser heat exchange plate 15 in the thickness direction of the condenser heat exchange plate 15. In other words, the notch 155 penetrates between two condenser attachment surfaces 151 of the condenser heat exchange plate 15 in the stacking direction of the plurality of condenser heat exchange plates 15. The notches 155 of the condenser heat exchange plates 15 are at a same position and have matched shapes. The condenser heat exchange plates 15 provided with the notches 155 are arranged adjacent to each other in the stacking direction of the plurality of condenser heat exchange plates 15, so that the notches 155 of the condenser heat exchange plates 15 communicate with each other, to form an accommodation cavity 16 (with reference to FIG. 18) in the plate condenser 10.

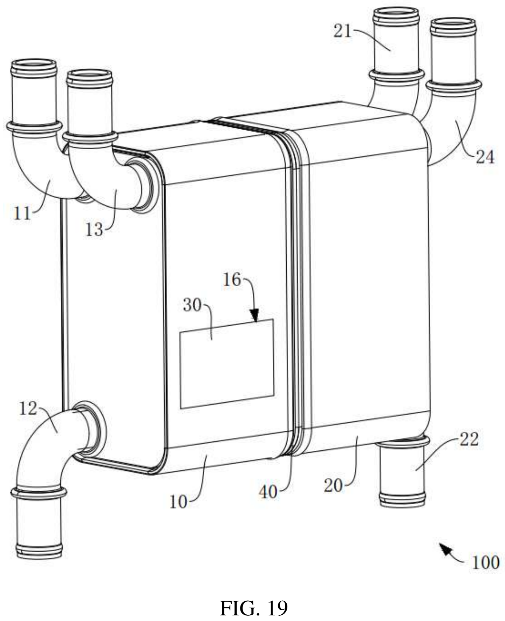

A shape of the accommodation cavity 16 in the plate condenser 10 matches a shape of the electronic expansion valve 30, so that the electronic expansion valve 30 is at least partially embedded into the accommodation cavity 16 of the plate condenser 10. As shown in FIG. 19, the electronic expansion valve 30 may be completely accommodated in the accommodation cavity 16 of the plate condenser 10, and an outer surface that is of the electronic expansion valve 30 and that is exposed to the accommodation cavity 16 of the plate condenser 10 is flush with an outer surface of the plate condenser 10.

In this embodiment, in the heat exchanger 100, while the plate condenser 10 and the plate evaporator 20 are integrated, the electronic expansion valve 30 is further integrated into the accommodation cavity 16 of the plate condenser 10, so that the heat exchanger 100 has a more compact structure, integration of the heat exchanger 100 is further improved, and the volume is reduced. The heat exchanger 100 provided in this embodiment is more conducive to mounting and arrangement of the temperature control apparatus 200 in the energy storage device or the vehicle.

It may be understood that, in some other embodiments, a similar notch (not shown in the figure) may also be provided on a part of evaporator heat exchange plates 25, and the evaporator heat exchange plates 25 with notches are stacked adjacent to each other, to form a similar accommodation cavity structure (not shown in the figure) on the plate evaporator 20. The electronic expansion valve 30 may be at least partially accommodated in the accommodation cavity of the plate evaporator 20. In this way, the integration of the heat exchanger 100 can also be improved, and the volume can also be reduced. This facilitates mounting and arrangement of the temperature control apparatus 200 in the energy storage device or the vehicle.

In an embodiment, when the electronic expansion valve 30 is at least partially accommodated in the accommodation cavity 16 of the plate condenser 10, the first refrigerant outlet 14 of the plate condenser 10 may alternatively be provided on an inner surface of the accommodation cavity 16 of the plate condenser 10, and the inlet 31 of the electronic expansion valve 30 is arranged to be aligned with and communicate with the first refrigerant outlet 14, to omit a runner structure between the first refrigerant outlet 14 and the inlet 31 of the electronic expansion valve 30.

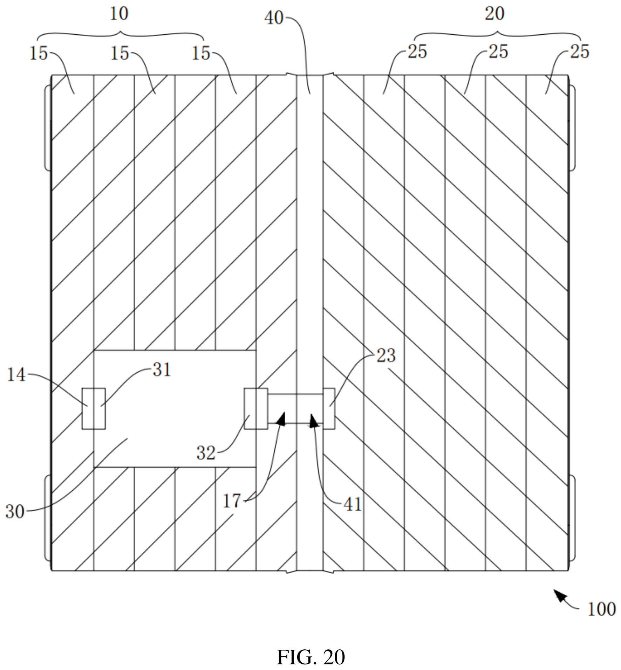

For details, refer to FIG. 20. Through disposition of a flow path of the internal passage 153 of each plate condenser 10 in the plate condenser 10, the first refrigerant outlet 14 of the plate condenser 10 may be provided on a side wall of the accommodation cavity 16 of the plate condenser 10. In this case, the inlet 31 of the electronic expansion valve 30 is provided in a matched manner, so that the inlet 31 of the electronic expansion valve 30 is aligned with the first refrigerant outlet 14. A casing of the electronic expansion valve 30 is attached to the side wall of the accommodation cavity 16 of the plate condenser 10, and the inlet 31 of the electronic expansion valve 30 communicates with the first refrigerant outlet 14. The heat exchange working medium flowing out of the plate condenser 10 may directly enter the electronic expansion valve 30.

In this embodiment, the inlet 31 of the electronic expansion valve 30 directly communicates with the first refrigerant outlet 14 of the plate condenser 10, so that a runner structure between the first refrigerant outlet 14 and the inlet 31 of the electronic expansion valve 30 is omitted, the integration of the heat exchanger 100 is further improved, and a quantity of components of the heat exchanger 100 is reduced. A quantity of runners of the heat exchanger 100 is reduced, and a leakage risk of the heat exchanger 100 is further reduced, and therefore, the reliability of the heat exchanger 100 is improved.

In an embodiment, as shown in FIG. 20, the outlet 32 of the electronic expansion valve 30 is also attached to an inner surface of the accommodation cavity 16 of the plate condenser 10. On a side of the plate evaporator 20, the second refrigerant inlet 23 of the plate evaporator 20 is provided on a surface that is of the plate evaporator 20 and that is attached to the intermediate partition plate 40. A first hole channel 17 and a second hole channel 41 are further provided in the plate condenser 10 and the intermediate partition plate 40 respectively. A position of the first hole channel 17 is set corresponding to the outlet of the electronic expansion valve 30, and the first hole channel 17 penetrates between an inner wall of the accommodation cavity 16 of the plate condenser 10 and the intermediate partition plate 40. The second hole channel 41 is aligned with an end portion of the first hole channel 17, and the second hole channel 41 is aligned with the second refrigerant inlet 23 of the plate evaporator 20. Therefore, the first hole channel 17 and the second hole channel 41 together form an internal hole channel of the heat exchanger 100, and the internal hole channel communicates between the outlet 32 of the electronic expansion valve 30 and the second refrigerant inlet 23. It may be learned that, in this embodiment, the outlet 32 of the electronic expansion valve 30 directly communicates with the second refrigerant inlet 23 through the internal hole channel of the heat exchanger 100, so that a runner structure between the outlet 32 of the electronic expansion valve 30 and the second refrigerant inlet 23 is omitted, the integration of the heat exchanger 100 is improved, and the quantity of components of the heat exchanger 100 is also reduced. The leakage risk of the heat exchanger 100 is further reduced, and the reliability is improved.

The first hole channel 17 may be understood as one internal passage 153 in the plate condenser 10, and the second hole channel 41 communicates one side with the other side of the intermediate partition plate 40 in the arrangement direction of the plate condenser 10 and the plate evaporator 20. In this case, the second hole channel 41 of the intermediate partition plate 40 is used to communicate the internal passage 153 of the plate condenser 10 with the outlet 32 of the electronic expansion valve 30. On a side of the plate evaporator 20, the second hole channel 41 of the intermediate partition plate 40 is further used to communicate the internal passage 153 of the plate condenser 10 with one internal passage 253 of the plate evaporator 20, so that the heat exchange working medium flowing out of the outlet 32 of the electronic expansion valve 30 can flow into the plate evaporator 20.

It may be understood that, when the electronic expansion valve 30 is at least partially accommodated in the accommodation cavity 26 of the plate evaporator 20, the second refrigerant inlet 23 of the plate evaporator 20 may alternatively be provided on the inner surface of the accommodation cavity 26 of the plate evaporator 20. Correspondingly, the outlet 32 of the electronic expansion valve 30 is aligned with the second refrigerant inlet 23, so that the heat exchange working medium flowing out of the outlet 32 of the electronic expansion valve 30 can directly flow into the plate evaporator 20.

In some embodiments, a hole channel structure may alternatively be provided inside the heat exchanger 100, to allow the first refrigerant outlet 14 of the plate condenser 10 to communicate with the inlet 31 of the electronic expansion valve 30 through the hole channel. The foregoing embodiment can also improve the integration and the reliability of the heat exchanger 100.

In this embodiment, the second hole channel 41 of the intermediate partition plate 40 is used to communicate one internal passage 153 of the plate evaporator 20 with the inlet 31 of the electronic expansion valve 30. On a side of the plate condenser 10, the second hole channel 41 of the intermediate partition plate 40 is further used to communicate one internal passage 153 of the plate condenser 10 with one internal passage 253 of the plate evaporator 20, so that the heat exchange working medium flowing out of the plate condenser 10 can flow into the inlet 31 of the electronic expansion valve 30.

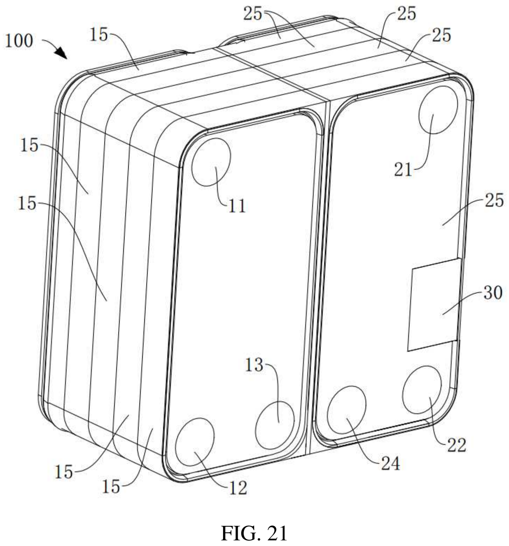

In an embodiment, an arrangement direction of a plurality of condenser heat exchange plates 15 may alternatively be perpendicular to an arrangement direction of the plate condenser 10 and an intermediate partition plate 40. Specifically, as shown in FIG. 21, in this embodiment, the first coolant inlet 11, the first coolant outlet 12, and the first refrigerant inlet 13 of the plate condenser 10 are all located on an outer surface of a side that is of the plate condenser 10 and that is perpendicular to the intermediate partition plate 40. In other words, the first coolant inlet 11, the first coolant outlet 12, and the first refrigerant inlet 13 are all located on an outer surface of the same condenser heat exchange plate 15. In addition, in this embodiment, the electronic expansion valve 30 is accommodated in an accommodation cavity 26 of the plate evaporator 20, and the first refrigerant outlet 14 of the plate condenser 10 communicates with the inlet 31 of the electronic expansion valve 30 through an internal hole channel of the heat exchanger 100.

Correspondingly, a plurality of evaporator heat exchange plates 25 of the plate evaporator 20 are also arranged in a direction perpendicular to an arrangement direction of the plate evaporator 20 and the intermediate partition plate 40. In this case, the second coolant inlet 21, the second coolant outlet 22, and the second refrigerant outlet 24 of the plate evaporator 20 are all located on an outer surface of a side that is of the plate evaporator 20 and that is perpendicular to the intermediate partition plate 40. In other words, the second coolant inlet 21, the second coolant outlet 22, and the second refrigerant outlet 24 are all located on an outer surface of the same evaporator heat exchange plate 25. The second refrigerant inlet 23 of the plate evaporator 20 is provided in the accommodation cavity of the plate evaporator 20 and communicates with the outlet 32 of the electronic expansion valve 30.

For the heat exchanger 100 in this application, in the embodiment shown in FIG. 21, a stacking direction of the plurality of condenser heat exchange plates 15 is perpendicular to the intermediate partition plate 40. One or more condenser heat exchange plates 15 are fastened to a side surface of the intermediate partition plate 40, and a gap between two adjacent condenser heat exchange plates 15 forms one internal passage 153 of the plate condenser 10. A plurality of internal passages 153 of the plate condenser 10 are all perpendicular to the intermediate partition plate 40.

In an embodiment, a stacking direction of the plurality of evaporator heat exchange plates 25 is perpendicular to the intermediate partition plate 40. In an embodiment, the stacking direction of the plurality of condenser heat exchange plates 15 is the same as the stacking direction of the plurality of evaporator heat exchange plates 25. One or more evaporator heat exchange plates 25 are fastened to another side surface of the intermediate partition plate 40, and a gap between two adjacent evaporator heat exchange plates 25 forms one internal passage 253 of the plate evaporator 20. A plurality of internal passages 253 of the plate evaporator 20 are all perpendicular to the intermediate partition plate 40.

In this case, both the plate condenser 10 and the plate evaporator 20 may be fastened to the intermediate partition plate 40 in a similar manner, to facilitate assembly of the heat exchanger 100.

In an embodiment, alternatively, the stacking direction of the plurality of condenser heat exchange plates 15 may be perpendicular to the intermediate partition plate 40, and the stacking direction of the plurality of evaporator heat exchange plates 25 may be parallel to the intermediate partition plate 40, or vice versa. In the foregoing implementations, while it is ensured that the plate condenser 10 and the plate evaporator 20 respectively implement heat exchange functions, a spacing distance between the plate condenser 10 and the plate evaporator 20 can be shortened, so that an overall volume of the heat exchanger 100 is small. Both the condenser heat exchange plate 15 and the evaporator heat exchange plate 25 and the intermediate partition plate 40 are arranged in a simple manner, and the plate condenser 10 and the plate evaporator 20 may be processed and assembled in an integrated manner. Therefore, manufacturing and assembly processes of the heat exchanger 100 are simplified.

In an embodiment, in the stacking direction of the plate condenser 10 or the stacking direction of the plate evaporator 20, a height of the intermediate partition plate 40 is less than or equal to a stacking height of the plate condenser 10 or the plate evaporator 20. In this embodiment, the height of the intermediate partition plate 40 is set to be less than the stacking height of the plate condenser 10 or the plate evaporator 20, so that a contour size of the intermediate partition plate 40 can be controlled, to prevent the intermediate partition plate 40 from extending out of an outer contour of the condenser heat exchange plate 15 or the evaporator heat exchange plate 25 and prevent an overall outline size of the heat exchanger 100 from expanding.

In an embodiment, the first coolant inlet 11, the first coolant outlet 12, and the first refrigerant inlet 13 of the plate condenser 10 and the second coolant inlet 21, the second coolant outlet 22, and the second refrigerant outlet 24 of the plate evaporator 20 are all located on a same side of the intermediate partition plate 40. In an embodiment, the outer surface on which the plate condenser 10 is provided with the first coolant inlet 11, the first coolant outlet 12, and the first refrigerant inlet 13 is flush with the outer surface on which the plate evaporator 20 is provided with the second coolant inlet 21, the second coolant outlet 22, and the second refrigerant outlet 24.

By such an arrangement, all ports of the heat exchanger 100 in this application are located on a same outer surface of the heat exchanger 100. In a mounting process of the heat exchanger 100, the heat exchanger 100 may be separately connected to the temperature control loop 201, the heat dissipation loop 202, and the compressor loop 203 in a same direction, to facilitate assembly and maintenance of the heat exchanger 100 in the temperature control apparatus 200 in this application.

It may be understood that, based on the arrangement of the condenser heat exchange plate 15 and the evaporator heat exchange plate 25, when the electronic expansion valve 30 is disposed at a different position, positions of the first refrigerant outlet 14 of the plate condenser 10 and the second refrigerant inlet 23 of the plate evaporator 20 may also be correspondingly adjusted. For example, the electronic expansion valve 30 may alternatively be disposed on a side that is of the heat exchanger 100 that is away from the first coolant inlet 11 and the second coolant inlet 21. In this case, the first refrigerant outlet 14 and the second refrigerant inlet 23 may also be located on the side that is of the heat exchanger 100 and that is away from the first coolant inlet 11 and the second coolant inlet 21 together with the electronic expansion valve 30.

In this embodiment, a connection line between the first coolant inlet 11 and the first coolant outlet 12 and a connection line between the first refrigerant inlet 13 and the first refrigerant outlet 14 are perpendicular to the intermediate partition plate 40, and the connection line between the first coolant inlet 11 and the first coolant outlet 12 is parallel to the connection line between the first refrigerant inlet 13 and the first refrigerant outlet 14. Correspondingly, a connection line between the second coolant inlet 21 and the second coolant outlet 22 and a connection line between the second refrigerant inlet 23 and the second refrigerant outlet 24 are perpendicular to or parallel to the intermediate partition plate 40, and the connection line between the second coolant inlet 21 and the second coolant outlet 22 is parallel to the connection line between the second refrigerant inlet 23 and the second refrigerant outlet 24. Such an arrangement also facilitates connections between the heat exchanger 100 and external runners, and facilitates arrangement of the internal passage of the plate condenser 10.

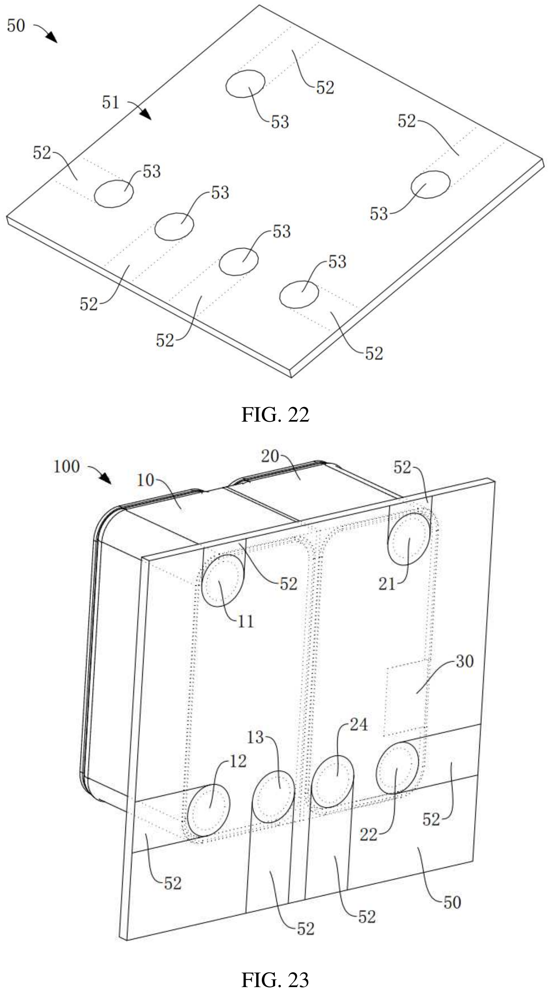

In an embodiment, the heat exchanger 100 may further include a refrigerant substrate 50. For details, refer to FIG. 22. The refrigerant substrate 50 is roughly plate-shaped, the plate-shaped refrigerant substrate 50 includes a mounting surface 51, and a plurality of liquid runners 52 are further provided inside the refrigerant substrate 50. The liquid runners 52 are spaced apart and sealed from each other, and each liquid runner 52 extends roughly in a direction parallel to the mounting surface 51. Each liquid runner 52 further forms a hole 53 on the mounting surface 51, and the liquid runner 52 communicates with the outside through the hole 53.

FIG. 23 shows a structure in which the refrigerant substrate 50 is assembled with the plate condenser 10 and the plate evaporator 20.

As shown in FIG. 23, the mounting surface 51 of the refrigerant substrate 50 may be attached to the plate condenser 10 and the plate evaporator 20. A part of holes 53 of the refrigerant substrate 50 may be respectively provided corresponding to the first coolant inlet 11, the first coolant outlet 12, and the first refrigerant inlet 13 of the plate condenser 10, so that three liquid runners 52 in the refrigerant substrate 50 separately communicate with the plate condenser 10. Other holes 53 of the refrigerant substrate 50 may be respectively provided corresponding to the second coolant inlet 21, the second coolant outlet 22, and the second refrigerant outlet 24, so that other three liquid runners 52 in the refrigerant substrate 50 separately communicate with the plate evaporator 20.

Therefore, liquid runners 52 in the refrigerant substrate 50 each may be constructed as a segment of the temperature control loop 201, the heat dissipation loop 202, and the compressor loop 203. The refrigerant substrate 50 may provide a coolant and/or a heat exchange working medium for the plate condenser 10 and the plate evaporator 20 through each liquid runner 52.

A structure of the refrigerant substrate 50 is plate-shaped. Compared with the foregoing path for the coolant and the heat exchange working medium to flow that is formed by using a pipe structure, the refrigerant substrate 50 of the plate-shaped structure has a simpler structure and better sealing performance, and can reduce the volume of the heat exchanger 100 and better prevent leakage. Further, the refrigerant substrate 50 may further be synchronously formed through welding with the plate condenser 10, the intermediate partition plate 40, and the plate evaporator 20, to further simplify the assembly process of the heat exchanger 100.

In the temperature control apparatus 200, the refrigerant substrate 50 of the heat exchanger 100 may be configured to form the temperature control loop 201, the heat dissipation loop 202, and the compressor loop 203 separately, so that a structure for connecting pipes is omitted, a quantity of pipes in the temperature control apparatus 200 is reduced, a volume of the temperature control apparatus 200 is reduced, and reliability is improved.

It may be understood that, in the embodiment shown in FIG. 23, there are six liquid runners 52 in the refrigerant substrate 50, and the six liquid runners 52 respectively communicate with the first coolant inlet 11, the first coolant outlet 12, the first refrigerant inlet 13, the second coolant inlet 21, the second coolant outlet 22, and the second refrigerant outlet 24. However, in some other embodiments, there may be less than six liquid runners 52 in the refrigerant substrate 50, and the liquid runners 52 communicate with a part of the foregoing ports of the heat exchanger 100. Other part of the ports of the heat exchanger 100 are provided on a side that is away from the mounting surface 51 of the refrigerant substrate 50, or provided on a side surface that is of the heat exchanger 100 and that is connected to the mounting surface 51. The other part of the ports is communicated through a pipe. This can also ensure implementation of a function of the heat exchanger 100 in this application.

It is clear that a person skilled in the art can make various modifications and variations to this application without departing from the protection scope of this application. This application is intended to cover these modifications and variations of this application provided that they fall within the scope of protection defined by the following claims and their equivalent technologies.

## Claims

1. An integrated plate heat exchanger, wherein the heat exchanger comprises an intermediate partition plate, a plate condenser, and a plate evaporator, the plate condenser and the plate evaporator are respectively fastened on two opposite sides of the intermediate partition plate, the plate condenser comprises a plurality of condenser heat exchange plates that are stacked, and the plate evaporator comprises a plurality of evaporator heat exchange plates that are stacked, wherein
at least one of a stacking direction of the plurality of condenser heat exchange plates or a stacking direction of the plurality of evaporator heat exchange plates is parallel to or perpendicular to the intermediate partition plate.

2. The heat exchanger according to claim 1, wherein the heat exchanger is sandwiched, and in an arrangement direction of the plate condenser and the plate evaporator, an area of the intermediate partition plate is less than or equal to areas of the plurality of condenser heat exchange plates or areas of the plurality of evaporator heat exchange plates; or
in a stacking direction of the plate condenser or a stacking direction of the plate evaporator, a height of the intermediate partition plate is less than or equal to a stacking height of the plate condenser or the plate evaporator.

3. The heat exchanger according to claim 1 or 2, wherein the stacking direction of the plurality of condenser heat exchange plates is the same as the stacking direction of the plurality of evaporator heat exchange plates.

4. The heat exchanger according to any one of claims 1 to 3, wherein in the arrangement direction of the plate condenser and the plate evaporator, a distance size between the plate condenser and the plate evaporator is equal to a thickness size of the intermediate partition plate.

5. The heat exchanger according to any one of claims 1 to 4, wherein the plate condenser comprises a first coolant inlet, a first coolant outlet, a first refrigerant inlet, and a first refrigerant outlet, and the plate evaporator comprises a second coolant inlet, a second coolant outlet, a second refrigerant inlet, and a second refrigerant outlet, wherein
the first coolant inlet communicates with the first coolant outlet through a coolant passage inside the plate condenser, and the first refrigerant inlet communicates with the first refrigerant outlet through a refrigerant passage inside the plate condenser; and
the second coolant inlet communicates with the second coolant outlet through a coolant passage inside the plate evaporator, and the second refrigerant inlet communicates with the second refrigerant outlet through a refrigerant passage inside the plate evaporator.

6. The heat exchanger according to claim 5, wherein a connection line between the first coolant inlet and the first coolant outlet and a connection line between the first refrigerant inlet and the first refrigerant outlet are perpendicular to or parallel to the intermediate partition plate, and the connection line between the first coolant inlet and the first coolant outlet is parallel to the connection line between the first refrigerant inlet and the first refrigerant outlet; and
a connection line between the second coolant inlet and the second coolant outlet and a connection line between the second refrigerant inlet and the second refrigerant outlet are perpendicular to or parallel to the intermediate partition plate, and the connection line between the second coolant inlet and the second coolant outlet is parallel to the connection line between the second refrigerant inlet and the second refrigerant outlet.

7. The heat exchanger according to claim 5, wherein the heat exchanger comprises a refrigerant substrate, and a plurality of runners are provided in the refrigerant substrate, wherein
the first coolant inlet, the first coolant outlet, and the first refrigerant inlet of the plate condenser are arranged on a surface that is of the plate condenser and that is perpendicular to the intermediate partition plate;
the second coolant inlet, the second coolant outlet, and the second refrigerant inlet of the plate evaporator are arranged on a surface that is of the plate evaporator and that is perpendicular to the intermediate partition plate; and
the refrigerant substrate is attached to the surface of the plate condenser and the surface of the plate evaporator, and the plurality of runners respectively communicate with the first coolant inlet, the first coolant outlet, the first refrigerant inlet, the second coolant inlet, the second coolant outlet, and the second refrigerant inlet.

8. The heat exchanger according to any one of claims 1 to 7, wherein the plate condenser and the plate evaporator each comprise a plurality of internal passages, wherein
the plurality of condenser heat exchange plates are arranged in parallel with the intermediate partition plate, one condenser heat exchange plate is arranged adjacent to the intermediate partition plate and is fastened to a side surface of the intermediate partition plate, and a gap between the condenser heat exchange plate and the intermediate partition plate forms one internal passage of the plate condenser; and
the plurality of evaporator heat exchange plates are arranged in parallel with the intermediate partition plate, one evaporator heat exchange plate is arranged adjacent to the intermediate partition plate and is fastened to another side surface of the intermediate partition plate, and a gap between the condenser heat exchange plate and the intermediate partition plate forms one internal passage of the plate evaporator.

9. The heat exchanger according to claims 1 to 7, wherein the plurality of condenser heat exchange plates are perpendicular to the intermediate partition plate, one or more condenser heat exchange plates are fastened to a side surface of the intermediate partition plate, and a gap between two adjacent condenser heat exchange plates forms one internal passage of the plate condenser; and
the plurality of evaporator heat exchange plates are perpendicular to the intermediate partition plate, one or more evaporator heat exchange plates are fastened to another side surface of the intermediate partition plate, and a gap between two adjacent evaporator heat exchange plates forms one internal passage of the plate evaporator.

10. The heat exchanger according to claim 8 or 9, wherein the heat exchanger comprises an accommodation cavity and an electronic expansion valve, the accommodation cavity is configured to accommodate the electronic expansion valve, and the electronic expansion valve is configured to reduce pressure of a heat exchange working medium flowing out of the plate condenser, wherein
at least a part of the plurality of condenser heat exchange plates comprise notches, the notch penetrates the condenser heat exchange plate in the stacking direction of the plurality of condenser heat exchange plates, the part of condenser heat exchange plates comprising the notches are sequentially arranged adjacent to each other, and the notches of the part of condenser heat exchange plates comprising the notches communicate with each other to form the accommodation cavity; or
at least a part of evaporator heat exchange plates of the plurality of plate evaporators comprise notches, the notch penetrates the evaporator heat exchange plate in the stacking direction of the plurality of evaporator heat exchange plates, the part of evaporator heat exchange plates comprising the notches are sequentially arranged adjacent to each other, and the notches of the part of evaporator heat exchange plates comprising the notches communicate with each other to form the accommodation cavity.

11. The heat exchanger according to claim 10, wherein the intermediate partition plate comprises a communicating hole channel, the hole channel communicates one side and the other side of the intermediate partition plate in the arrangement direction of the plate condenser and the plate evaporator, and the hole channel is used to:
communicate the internal passage of the plate condenser with an outlet of the electronic expansion valve; or
communicate the internal passage of the plate evaporator with an inlet of the electronic expansion valve.

12. A temperature control apparatus, comprising a radiator, a compressor, and the heat exchanger according to any one of claims 1 to 11, wherein
the radiator is configured to cool a coolant flowing out of the plate condenser; and
the compressor is configured to boost pressure of a heat exchange working medium transmitted between the plate evaporator and the plate condenser.

13. An energy storage device, comprising a battery pack and the temperature control apparatus according to claim 12, wherein the temperature control apparatus is configured to control a temperature of the battery pack by using the heat exchanger.

14. A vehicle, comprising a powertrain and the energy storage device according to claim 13, wherein the energy storage device is configured to supply power to the powertrain.
